# EUROPEAN PATENT APPLICATION

(11) **EP 2 793 497 A1**
(43) Date of publication of application: **22.10.2014**
(21) Application number: 13738488.9
(22) Date of filing: 17.01.2013
(51) Int. Cl.: H04W 12/06

(54) **METHOD, DEVICE AND SYSTEM FOR ESTABLISHING DEVICE TO DEVICE CONNECTION**

(30) Priority: 17.01.2012 CN 201210014052
(71) Applicant: Huawei Technologies Co., Ltd, Shenzhen, Guangdong 518129 (CN)
(72) Inventor: ZHOU, Weihua, Shenzhen Guangdong 518129 (CN); ZHANG, Wanqiang, Shenzhen Guangdong 518129 (CN); WU, Xiaobo, Shenzhen Guangdong 518129 (CN)
(74) Representative: Maiwald Patentanwalts GmbH
(86) International application number: PCT/CN2013/070593
(87) International publication number: WO 2013/107359

(57) **Abstract**

The present invention discloses a method, a device, and a system for establishing a device-to-device connection and relates to the field of communications technologies. The method includes: sending, by a first device in D2D communication, a D2D authentication request to an MME that serves the first device, so as to trigger the MME to authenticate the first device; receiving, by the first device, an authentication response message transferred by the MME by using an eNB and enabling, according to the authentication response message, D2D monitoring and broadcasting functions; and, when the first device detects a second device in the D2D communication, sending, by the first device, a connection establishment request message to the eNB, so as to trigger the eNB to establish a D2D communication link between the first device and the second device. Thereby, a D2D connection between the two devices is controlled by a network. Therefore, an operator can effectively perform functions, such as control, management, and charging, on the D2D communication. In addition, compared with the prior art, after the D2D connection is established, because the network can be effectively controlled, interference brought by D2D communication to a UE can further be eliminated.

## Description

This application claims priority to Chinese Patent Application No. 201210014052.5, filed with the Chinese Patent Office on January 17, 2012 and entitled "METHOD, DEVICE, AND SYSTEM FOR ESTABLISHING DEVICE-TO-DEVICE CONNECTION", which is incorporated herein by reference in its entirety.

### TECHNICAL FIELD

The present invention relates to the field of communications technologies, and in particular, to a method, a device, and a system for establishing a device-to-device connection.

### BACKGROUND

A D2D (Device-to-Device, device-to-device) technology enables two devices to directly perform transmission and exchange of data. Currently, multiple technologies can support D2D communication, such as Bluetooth, an ultra-broadband technology, and a wireless local area network technology.

One device in D2D broadcasts a character string, so that another device in D2D learns an identification feature, an application service, and broadcast content of the device that broadcasts the character string. When the other device in D2D receives the character string broadcast by the one device in D2D, if the character string matches an interest of a user of the other device, and the user wants to obtain more specific information, the other device sends "paging" signaling to the one device in D2D. After receiving the signaling, the one device in D2D directly establishes a connection to the other device in D2D. Data transmission can be performed after a communication link between the two devices is established successfully. When a D2D connection is established by using the foregoing manner, controllability on communication between the D2D devices is comparatively poor.

In the prior art, a D2D device has a function of recognizing radio resources for communication. That is, the D2D device independently perceives an external environment, and independently performs, according to a recognition result, resource management and configuration, and D2D link establishment and management between devices without a need of control and allocation from a network. However, the two devices in D2D communication still use network resources, if the network is congested, data transmission between the two devices in D2D communication is affected.

### SUMMARY

The present invention provides a method, a device, and a system for establishing a device-to-device connection, which can effectively perform network control and resource management on D2D communication.

According to a first aspect, a method for establishing a device-to-device connection is provided, where the method includes:
sending, by a first device in device-to-device D2D communication, a D2D authentication request to a mobility management entity MME that serves the first device, so as to trigger the MME to authenticate the first device;
receiving, by the first device, an authentication response message transferred by the MME by using an evolved base station eNB that serves the first device, and enabling, according to the authentication response message, D2D monitoring and broadcasting functions; and
when the first device detects a second device in the D2D communication, sending, by the first device, a connection establishment request message to the eNB, where the connection establishment request message carries D2D identifier information of the second device, so as to trigger the eNB to establish, according to the D2D identifier information of the second device, a D2D communication link between the first device and the second device.

In a first possible implementation manner of the first aspect, the sending, by a first device in D2D communication, a D2D authentication request to a mobility management entity MME that serves the first device, so as to trigger the MME to authenticate the first device includes:
sending, by the first device, an attachment request message to the MME, where the attachment request message carries the D2D authentication request of the first device, so as to trigger the MME to acquire subscription information of the first device from a home subscriber server HSS, where the subscription information includes a D2D identifier of the first device and permission information about whether the first device can use a D2D function.

According to the first aspect or the first possible implementation manner of the first aspect, in a second possible implementation manner, the receiving, by the first device, an authentication response message transferred by the MME by using an eNB that serves the first device includes:
receiving, by the first device, the authentication response message sent by the eNB, where the authentication response message is sent by the eNB, which is triggered when the MME sends, after completing authentication on the first device, an initial context establishment request message to the eNB.

According to any one of the foregoing possible implementation manners, in a third possible implementation manner, the method further includes:
sending, by the first device, a service request message to the MME, so as to trigger the MME to transfer, by using the initial context establishment request message, D2D function authentication result information of the first device to the eNB, where the authentication result information includes the D2D identifier of the first device and the permission information about whether the first device can use the D2D function.

According to a second aspect, a method for establishing a device-to-device connection is further provided, where the method includes:
receiving, by an evolved base station eNB, a device-to-device D2D authentication response message of a first device sent by a mobility management entity MME that serves the first device;
transferring, by the eNB, the authentication response message to the first device, so that the first device enables, according to the authentication response message, D2D monitoring and broadcasting functions;
receiving, by the eNB, a connection establishment request message sent by the first device when the first device detects a second device, where the connection establishment request message carries D2D identifier information of the second device, where the first device and the second device are two devices in D2D communication; and
establishing, by the eNB according to the D2D identifier information of the second device, a D2D communication link between the first device and the second device.

In a first possible implementation manner, the receiving, by an eNB, a device-to-device D2D authentication response message of a first device sent by a mobility management entity MME that serves the first device includes:
receiving, by the eNB, an initial context establishment request message sent by the MME, where the initial context establishment request message carries the D2D authentication response message of the first device.

According to the second aspect or the first possible implementation manner of the second aspect, in a second possible implementation manner, the D2D authentication response message includes a D2D identifier of the first device, D2D information that the first device needs to broadcast, and permission information about whether the first device can use a D2D function.

According to any one of the foregoing possible implementation manners, in a third possible implementation manner, the establishing, by the eNB according to the identifier information of the second device, a D2D communication link between the first device and the second device includes:
querying, locally by the eNB, the second device according to the D2D identifier information of the second device; if the eNB locally finds information about the second device, controlling the establishing of the D2D communication link between the first device and the second device; and
if the eNB does not locally find the information about the second device, sending the connection establishment request message to the MME that serves the first device, so that the MME that serves the first device triggers the second device to connect to a network; receiving, by the eNB, an indication that the second device is connected to the network, where the indication is returned by the MME that serves the first device; and controlling the establishing of the D2D communication link between the first device and the second device.

According to a third aspect, a method for establishing a device-to-device connection is further provided, where the method includes:
receiving, by a mobility management entity MME to that serves a first device, a device-to-device D2D authentication request sent by the first device, and authenticating the first device; and
transferring, by the MME, a D2D authentication response message to the first device by using an evolved base station eNB that serves the first device, so that the first device enables, according to the D2D authentication response message, D2D monitoring and broadcasting functions and, when detecting a second device, sends a connection establishment request message to the eNB, and so that further the eNB establishes, after receiving the connection establishment request message sent by the first device and according to identifier information of the second device detected by the first device, a D2D communication link between the first device and the second device, where the first device and the second device are two devices in D2D communication.

In a first possible implementation manner, the receiving, by an MME to that serves a first device, a device-to-device D2D authentication request sent by the first device and authenticating the first device includes:
receiving, by the MME, an attachment request message sent by the first device, where the attachment request message carries the D2D authentication request of the first device; and acquiring subscription information of the first device from a home subscriber server HSS, where the subscription information includes a D2D identifier of the first device and permission information about whether the first device can use a D2D function.

According to the third aspect or the first possible implementation manner of the third aspect, in a second possible implementation manner, the transferring, by the MME that serves the first device, an authentication response message to the first device by using an evolved base station eNB that serves the first device includes:
after the MME completes authentication on the first device, sending, by the MME, an initial context establishment request message to the eNB, so as to trigger the eNB to transfer the authentication response message to the first device, where the initial context establishment request message carries the authentication response message of the first device.

According to the second possible implementation manner of the third aspect, in a third possible implementation manner, the authentication response message includes the D2D identifier of the first device, D2D information that the first device needs to broadcast, and the permission information about whether the first device can use the D2D function.

According to any one of the foregoing possible implementation manners of the third aspect, in a fourth possible implementation manner, after the transferring, by the MME, an authentication response message to the first device by using an evolved base station eNB that serves the first device, the method further includes:
receiving, by the MME, the connection establishment request message sent by the eNB; locally querying the second device according to D2D identifier information of the second device; if information about the second device is found locally, initiating a paging process to the second device to trigger the second device to connect to a network; and, after the second device is connected to the network, returning, by the MME, a first connection establishment response message to the eNB, where the first connection establishment response message is used to indicate to the eNB that the second device has been connected to the network, so that the eNB controls the establishing of the D2D communication link between the first device and the second device.

According to any one of the foregoing possible implementation manners of the third aspect, in a fifth possible implementation manner, the method further includes:
if the MME that serves the first device does not locally find the information about the second device, querying, by the MME, the HSS about an MME that serves the second device by using the D2D identifier of the second device, and sending a D2D connection establishment request message to the MME that serves the second device, so that the MME that serves the second device initiates the paging process to trigger the second device to connect to the network; and, after the second device is connected to the network, receiving, by the MME that serves the first device, a second connection establishment response message returned by the MME that serves the second device and sending the second connection establishment response message to the eNB, where the second connection establishment response message is used to indicate to the eNB that the second device has been connected to the network, so that the eNB controls the establishing of the D2D communication link between the first device and the second device; or
if the MME that serves the first device does not locally find the second device, acquiring an identifier of an MME that serves the second device from the D2D identifier information of the second device, and finding, according to the identifier of the MME that serves the second device, the MME that serves the second device, so that the MME that serves the second UE initiates the paging process to trigger the second device to connect to the network; and, after the second device is connected to the network, receiving, by the MME that serves the first device, a second connection establishment response message returned by the MME that serves the second device and sending the second connection establishment response message to the eNB, where the second connection establishment response message is used to indicate to the eNB that the second device has been connected to the network, so that the eNB controls the establishing of the D2D communication link between the first device and the second device.

According to a fourth aspect, a first device in device-to-device communication is further provided, where the device includes:
a sending module, configured to send a device-to-device D2D authentication request to a mobility management entity MME that serves the first device, so as to trigger the MME to authenticate the first device;
an enabling module, configured to receive an authentication response message transferred by the MME by using an evolved base station eNB that serves the first device and enable, according to the authentication response message, D2D monitoring and broadcasting functions; and
a connecting module, configured to, when the enabling module detects a second device in the D2D communication, send a connection establishment request message to the eNB, where the connection establishment request message carries D2D identifier information of the second device, so as to trigger the eNB to establish, according to the D2D identifier information of the second device, a D2D communication link between the first device and the second device.

In a first possible implementation manner, the sending module is specifically configured to:
send an attachment request message to the MME that serves the first device, where the attachment request message carries the D2D authentication request of the first device, so as to trigger the MME to acquire subscription information of the first device from a home subscriber server HSS, where the subscription information includes a D2D identifier of the first device and permission information about whether the first device can use a D2D function.

According to any one of the foregoing possible implementation manners of the fourth aspect, in a second possible implementation manner, the enabling module is configured to:
receive the D2D authentication response message sent by the eNB, where the authentication response message is sent by the eNB, which is triggered when the MME sends, after completing authentication on the first device, an initial context establishment request message to the eNB.

According to any one of the foregoing possible implementation manners of the fourth aspect, in a third possible implementation manner, the sending module is further configured to:
send a service request message to the MME, so as to trigger the MME to send, by using the initial context establishment request message, D2D function authentication result information of the first device to the eNB, where the authentication result information includes the D2D identifier of the first device, the permission information about whether the first device can use the D2D function, and the permission information about whether the first device can use the D2D function.

In a fifth aspect, an evolved base station eNB is further provided, where the base station includes:
a receiving module, configured to receive a device-to-device D2D authentication response message of a first device sent by a mobility management entity MME that serves the first device;
a processing module, configured to transfer the authentication response message to the first device, so that the first device enables, according to the authentication response message, D2D monitoring and broadcasting functions; and
a connecting module, configured to, receive a connection establishment request message sent by the first device when the first device detects a second device, where the connection establishment request message carries D2D identifier information of the second device, and establish, according to the identifier information of the second device, a D2D communication link between the first device and the second device, where the first device and the second device are two devices in D2D communication.

According to any one of the foregoing possible implementation manners of the fifth aspect, in a first possible implementation manner, the receiving module is specifically configured to:
receive an initial context establishment request message sent by the MME, where the initial context establishment request message carries the D2D authentication response message of the first device.

According to any one of the foregoing possible implementation manners of the fifth aspect, in a second possible implementation manner, the authentication response message includes a D2D identifier of the first device, D2D information that the first device needs to broadcast, and permission information about whether the first device can use a D2D function.

According to any one of the foregoing possible implementation manners of the fifth aspect, in a third possible implementation manner, the connecting module is specifically configured to:
query, on the eNB according to the D2D identifier information of the second device, the second device; and if information about the second device is found on the eNB, control the establishing of the D2D communication link between the first device and the second device; and
if the information about the second device is not found on the eNB, send the connection establishment request message to the MME that serves the first device, so that the MME that serves the first device triggers the second device to connect to a network; receive an indication that the second device is connected to the network, where the indication is returned by the MME that serves the first device; and control the establishing of the D2D communication link between the first device and the second device.

According to a sixth aspect, a mobility management entity MME to that serves a first device is further provided, which includes:
an authenticating module, configured to receive a device-to-device D2D authentication request sent by the first device and authenticate the first device; and
a sending module, configured to transfer a D2D authentication response message to the first device by using an evolved base station eNB that serves the first device, so that the first device enables, according to the D2D authentication response message, D2D monitoring and broadcasting functions and, when detecting a second device, sends a connection establishment request message to the eNB, and so that further the eNB establishes, after receiving the connection establishment request message sent by the first device and according to identifier information of the second device detected by the first device, a D2D communication link between the first device and the second device, where the first device and the second device are two devices in D2D communication.

According to any one of the foregoing possible implementation manners of the sixth aspect, in a first possible implementation manner, the authenticating module is specifically configured to:
receive an attachment request message sent by the first device, where the attachment request message carries the D2D authentication request of the first device; and acquire subscription information of the first device from a home subscriber server HSS, where the subscription information includes a D2D identifier of the first device and permission information about whether the first device can use a D2D function.

According to any one of the foregoing possible implementation manners of the sixth aspect, in a second possible implementation manner, the sending module is specifically configured to:
after the authenticating module completes authentication on the first device, send an initial context establishment request message to the eNB, so as to trigger the eNB to transfer the authentication response message to the first device, where the initial context establishment request message carries the authentication response message of the first device.

According to any one of the foregoing possible implementation manners of the sixth aspect, in a third possible implementation manner, the authentication response message includes the D2D identifier of the first device, D2D information that the first device needs to broadcast, and the permission information about whether the first device can use the D2D function.

According to any one of the foregoing possible implementation manners of the sixth aspect, in a fourth possible implementation manner, the MME further includes:
a receiving module, configured to, after the sending module transfers the authentication response message to the first device by using the eNB, receive the connection establishment request message sent by the eNB that serves the first device and query, on the MME that serves the first device and according to the D2D identifier information of the second device, the second device; and, if information about the second device is found in the MME, initiate a paging process to the second device to trigger the second device to connect to a network, where after the second device is connected to the network, the sending module is further configured to return a first connection establishment response message to the eNB, where the first connection establishment response message is used to indicate to the eNB that the second device has been connected to the network, so that the eNB controls the establishing of the D2D communication link between the first device and the second device.

According to any one of the foregoing possible implementation manners of the sixth aspect, in a fifth possible implementation manner, the sending module is further configured to, if the information about the second device is not found in the MME that serves the first device, query the HSS about an MME that serves the second device by using the D2D identifier of the second device, and send a D2D connection establishment request message to the MME that serves the second device, so that the MME that serves the second device initiates the paging process to trigger the second device to connect to the network, and, after the second device is connected to the network, the receiving module is further configured to receive a second connection establishment response message returned by the MME that serves the second device and send the second connection establishment response message to the eNB, where the second connection establishment response message is used to indicate to the eNB that the second device has been connected to the network, so that the eNB controls the establishing of the D2D communication link between the first device and the second device; or
if the MME that serves the first device does not locally find the information about the second device, acquire an identifier of an MME that serves the second device from the D2D identifier information of the second device and find, according to the identifier of the MME that serves the second device, the MME that serves the second device, so that the MME that serves the second device initiates the paging process to trigger the second device to connect to the network; and, after the second device is connected to the network, the MME that serves the first device receives a second connection establishment response message returned by the MME that serves the second device and send the second connection establishment response message to the eNB, where the second connection establishment response message is used to indicate to the eNB that the second device has been connected to the network, so that the eNB controls the establishing of the D2D communication link between the first device and the second device.

According to a seventh aspect, a system for establishing a device-to-device connection is further provided, where the system includes: the first device in device-to-device communication described above, the evolved base station described above, and a mobility management entity that serves the first device described above.

A beneficial effect brought by the technical solutions provided in the embodiments of the present invention is as follows: A first device in device-to-device D2D communication sends a D2D authentication request to a mobility management entity MME that serves the first device, so as to trigger the MME to authenticate the first device; the first device receives an authentication response message transferred by the MME by using an evolved base station eNB that serves the first device and enables, according to the authentication response message, D2D monitoring and broadcasting functions; and, when the first device detects a second device in the D2D communication, the first device sends a connection establishment request message to the eNB, so as to trigger the eNB to establish a D2D communication link between the first device and the second device. Thereby, a D2D connection between the two devices is controlled by a network. Therefore, an operator can effectively perform functions, such as control, management, and charging, on the D2D communication. In addition, compared with the prior art, after the D2D connection is established, because the network can be effectively controlled, interference brought by D2D communication to a UE can further be eliminated.

### BRIEF DESCRIPTION OF DRAWINGS

To describe the technical solutions in the embodiments of the present invention more clearly, the following briefly introduces the accompanying drawings required for describing the embodiments. Apparently, the accompanying drawings in the following description show merely some embodiments of the present invention, and a person of ordinary skill in the art may still derive other drawings from these accompanying drawings without creative efforts.
FIG. 1 is a flowchart of a method for establishing a device-to-device connection according to an embodiment of the present invention;
FIG. 2 is a flowchart of another method for establishing a device-to-device connection according to an embodiment of the present invention;
FIG. 3 is a flowchart of still another method for establishing a device-to-device connection according to an embodiment of the present invention;
FIG. 4 is a flowchart of still another method for establishing a device-to-device connection according to an embodiment of the present invention;
FIG. 5 is a process in which authentication on a first UE is performed in a network attachment process of a UE according to an embodiment of the present invention;
FIG. 6 is a schematic diagram of a first device in device-to-device communication according to an embodiment of the present invention;
FIG. 7 is a schematic diagram of an evolved base station according to an embodiment of the present invention;
FIG. 8 is a schematic diagram of a mobility management entity MME to that serves a first device according to an embodiment of the present invention;
FIG. 9 is a schematic diagram of another mobility management entity MME to that serves a first device according to an embodiment of the present invention; and
FIG. 10 is a schematic diagram of a system for establishing a device-to-device connection according to an embodiment of the present invention.

### DESCRIPTION OF EMBODIMENTS

To make the objectives, technical solutions, and advantages of the present invention more clearly, the following further details the present invention with reference to the accompanying drawings. Apparently, the described embodiments show merely some embodiments of the present invention but not all embodiments. All other embodiments obtained by a person of ordinary skill in the art based on the embodiments of the present invention without creative efforts shall fall within the protection scope of the present invention.

In an existing network, a first device, a second device, a third device, and a base station exist. The first device and the second device independently establish a connection and independently manage and configure perceived radio resources, and therefore the network does not need to control or allocate radio resources. Because of the lack of authentication and authorization of an operating network and the lack of proper resource allocation and mechanisms such as interference control, data transmission is affected when congestion occurs in the network. For example, when data is transmitted between the first device and the second device, interference is received from communication between the base station and the first device, communication between the base station and the second device, or communication between the base station and the third device or between the first device and the third device, and therefore communication quality of the network is affected.

To solve the foregoing problem, the present invention provides the following technical solution.

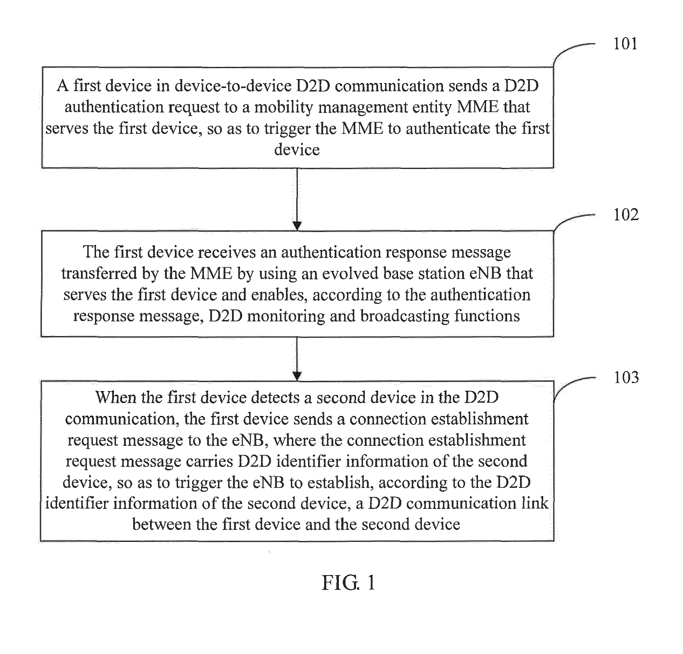

Referring to FIG. 1, an embodiment provides a method for establishing a device-to-device connection, including:
101: A first device in device-to-device D2D communication sends a D2D authentication request to a mobility management entity MME that serves the first device, so as to trigger the MME to authenticate the first device.
102: The first device receives an authentication response message transferred by the MME by using an evolved base station eNB that serves the first device and enables, according to the authentication response message, D2D monitoring and broadcasting functions.
103: When the first device detects a second device in the D2D communication, the first device sends a connection establishment request message to the eNB, where the connection establishment request message carries D2D identifier information of the second device, so as to trigger the eNB to establish, according to the D2D identifier information of the second device, a D2D communication link between the first device and the second device.

In this embodiment, that a first device in D2D communication sends a D2D authentication request to a mobility management entity MME that serves the first device, so as to trigger the MME to authenticate the first device includes:
sending, by the first device in the D2D communication, an attachment request message to the MME that serves the first device, where the attachment request message carries the D2D authentication request of the first device, so as to trigger the MME to acquire subscription information of the first device from a home subscriber server HSS, where the subscription information includes a D2D identifier of the first device and permission information about whether the first device can use a D2D function.

In this embodiment, that the first device receives an authentication response message transferred by the MME by using an eNB that serves the first device includes:

receiving, by the first device, the authentication response message sent by the eNB that serves the first device, where the authentication response message is sent by the eNB that serves the first device, which is triggered when the MME sends, after completing authentication on the first device, an initial context establishment request message to the eNB that serves the first device.

In this embodiment, the method further includes:
sending, by the first device, a service request message to the MME that serves the first device, so as to trigger the MME to transfer, by using the initial context establishment request message, D2D function authentication result information of the first device to the eNB, where the authentication result information includes the D2D identifier of the first device and the permission information about whether the first device can use the D2D function.

A beneficial effect of this embodiment includes the following: A first device in device-to-device D2D communication sends a D2D authentication request to a mobility management entity MME that serves the first device, so as to trigger the MME to authenticate the first device; the first device receives an authentication response message transferred by the MME by using an evolved base station eNB that serves the first device and enables, according to the authentication response message, D2D monitoring and broadcasting functions; and, when the first device detects a second device in the D2D communication, the first device sends a connection establishment request message to the eNB, so as to trigger the eNB to establish a D2D communication link between the first device and the second device. Thereby, a D2D connection between the two devices is controlled by a network. Therefore, an operator can effectively perform functions, such as control, management, and charging, on the D2D communication. In addition, compared with the prior art, after the D2D connection is established, because the network can be effectively controlled, interference brought by D2D communication to a UE can further be eliminated.

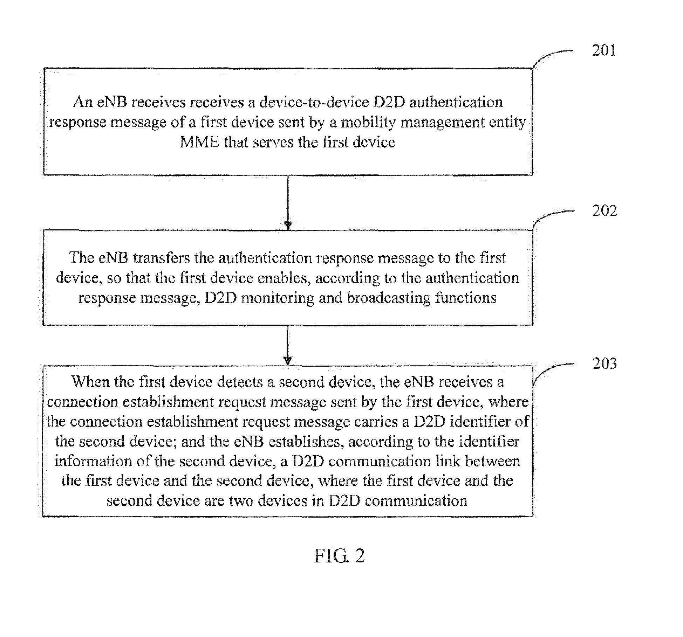

Referring to FIG. 2, an embodiment provides a method for establishing a device-to-device connection, including:
201: An eNB receives receives a device-to-device D2D authentication response message of a first device sent by a mobility management entity MME that serves the first device.
202: The eNB transfers the authentication response message to the first device, so that the first device enables, according to the authentication response message, D2D monitoring and broadcasting functions.
203: When the first device detects a second device, the eNB receives a connection establishment request message sent by the first device, where the connection establishment request message carries a D2D identifier of the second device; and the eNB establishes, according to the identifier information of the second device, a D2D communication link between the first device and the second device, where the first device and the second device are two devices in D2D communication.

In this embodiment, that an eNB receives a device-to-device D2D authentication response message of a first device sent by a mobility management entity MME that serves the first device includes:
receiving, by the eNB, an initial context establishment request message sent by the MME that serves the first device, where the initial context establishment request message carries the authentication response message of the first device, where the authentication response message includes a D2D identifier of the first device, D2D information that the first device needs to broadcast, and permission information about whether the first device can use a D2D function.

In this embodiment, that the eNB establishes, according to the identifier information of the second device, a D2D communication link between the first device and the second device includes:
querying, locally by the eNB, the second device according to the D2D information identifier of the second device; if the eNB locally finds information about the second device, controlling a establishing of the D2D communication link between the first device and the second device; and
if the eNB does not locally find the information about the second device, sending the connection establishment request message to the MME that serves the first device, so that the MME that serves the first device triggers the second device to connect to a network; receiving, by the eNB, an indication that the second device is connected to the network, where the indication is returned by the MME that serves the first device; and controlling a establishing of the D2D communication link between the first device and the second device.

A beneficial effect of this embodiment includes the following: An evolved base station eNB receives a device-to-device D2D authentication response message on a first device sent by a mobility management entity MME that serves the first device and transfers the authentication response message to the first device, so that the first device enables, according to the authentication response message, D2D monitoring and broadcasting functions; and, when the first device detects a second device, the eNB receives a connection establishment request message sent by the first device and establishes a D2D communication link between the first device and the second device. Thereby, a D2D connection between the two devices is controlled by a network. Therefore, an operator can effectively perform functions, such as control, management, and charging, on the D2D communication. In addition, compared with the prior art, after the D2D connection is established, because the network can be effectively controlled, interference brought by D2D communication to a UE can further be eliminated.

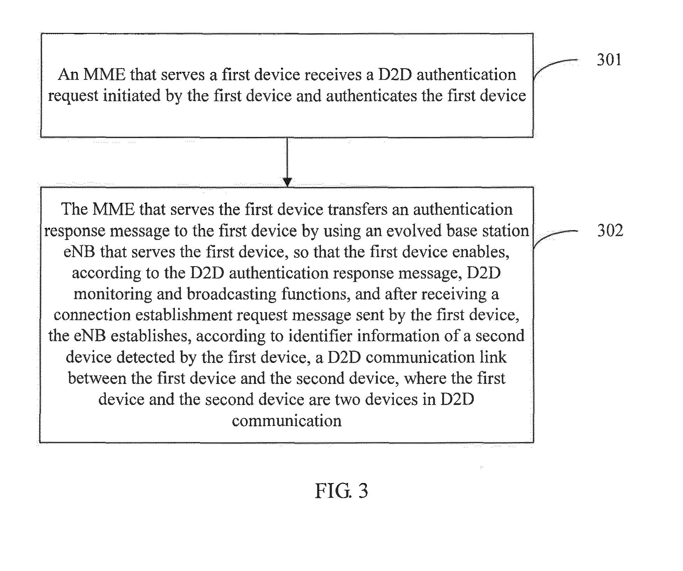

Referring to FIG. 3, an embodiment provides a method for establishing a device-to-device connection, including:
301: An MME to that serves a first device receives a D2D authentication request sent by the first device and authenticates the first device.
302: The MME that serves the first device transfers an authentication response message to the first device by using an evolved base station eNB that serves the first device, so that the first device enables, according to the D2D authentication response message, D2D monitoring and broadcasting functions, and so that the eNB establishes, after receiving a connection establishment request message sent by the first device and according to identifier information of a second device detected by the first device, a D2D communication link between the first device and the second device, where the first device and the second device are two devices in D2D communication.

In this embodiment, that an MME to that serves a first device receives a device-to-device D2D authentication request sent by the first device and authenticates the first device includes:
receiving, by the MME that serves the first device, an attachment request message sent by the first device, where the attachment request message carries the D2D authentication request of the first device, and acquiring subscription information of the first device from a home subscriber server HSS, where the subscription information includes a D2D identifier of the first device and permission information about whether the first device can use a D2D function.

In this embodiment, that the MME that serves the first device transfers an authentication response message to the first device by using an evolved base station eNB that serves the first device includes:
after the MME completes authentication on the first device, sending, by the MME, an initial context establishment request message to the eNB that serves the first device, so as to trigger the eNB that serves the first device to transfer the authentication response message to the first device, where the initial context establishment request message carries the D2D authentication response message of the first device, where the authentication response message includes the D2D identifier of the first device, D2D information that the first device needs to broadcast, and the permission information about whether the first device can use the D2D function.

In this embodiment, after the MME that serves the first device transfers an authentication response message to the first device by using an evolved base station eNB that serves the first device, the method further includes:
receiving, by the MME that serves the first device, the connection establishment request message sent by the eNB that serves the first device; locally querying the second device according to D2D identifier information of the second device; if information about the second device is found locally, initiating a paging process to the second device to trigger the second device to connect to a network; and, after the second device is connected to the network, returning, by the MME that serves the first device, a first connection establishment response message to the eNB, where the first connection establishment response message is used to indicate to the eNB that the second device has been connected to the network.

Further, in this embodiment, if the MME that serves the first device does not locally find the information about the second device, the MME queries, the HSS about an MME that serves the second device by using the D2D identifier of the second device, and sends a D2D connection establishment request message to the MME that serves the second device, so that the MME that serves the second device initiates the paging process to trigger the second device to connect to the network; and, after the second device is connected to the network, the MME that serves the first device receives a second connection establishment response message returned by the MME that serves the second device and sends the second connection establishment response message to the eNB, where the second connection establishment response message is used to indicate to the eNB that the second device has been connected to the network; or
alternatively, in this embodiment, the method further includes:
if the MME that serves the first device does not locally find the second device, acquiring, an identifier of the MME that serves the second device from the D2D identifier information of the second device and finding, according to the identifier of the MME that serves the second device, the MME that serves the second device, so that the MME that serves the second device initiates the paging process to trigger the second device to connect to the network.

A beneficial effect of this embodiment includes the following: A mobility management entity MME to that serves a first device receives a D2D authentication request sent by the first device and authenticates the first device; and an MME that serves the first device transfers an authentication response message to the first device by using an eNB, so that the first device enables, according to the D2D authentication response message, a D2D function, and that the eNB establishes, after receiving a connection establishment request message sent by the first message and according to identifier information of the second device detected by the first device, a D2D communication link between the first device and the second device. Thereby, a D2D connection between the two devices is controlled by a network. Therefore, an operator can effectively perform functions, such as control, management, and charging, on the D2D communication. In addition, compared with the prior art, after the D2D connection is established, because the network can be effectively controlled, interference brought by D2D communication to a UE can further be eliminated.

This embodiment provides a method for establishing a device-to-device connection. In this embodiment, except that communication between UEs can be performed conventionally by using a network, communication between UEs can also be performed by using a direct D2D link. In one aspect, each UE that supports a D2D function may send D2D information externally in an agreed manner after passing network authentication and authorization, so that other nearby UEs can detect existence of the UE and further send a D2D communication request to the UE. In another aspect, the UE that supports the D2D function may use the D2D function to start monitoring in a same agreed manner whether another nearby UE is sending D2D information, so as to discover existence of another UE that expects to use D2D for communication. In this embodiment, from when a UE accesses a network to when the UE establishes a D2D connection with another UE so as to perform communication, the following several phases are mainly included: 1) D2D authentication and authorization; 2) UE discovery; 3) establishment of a D2D connection.

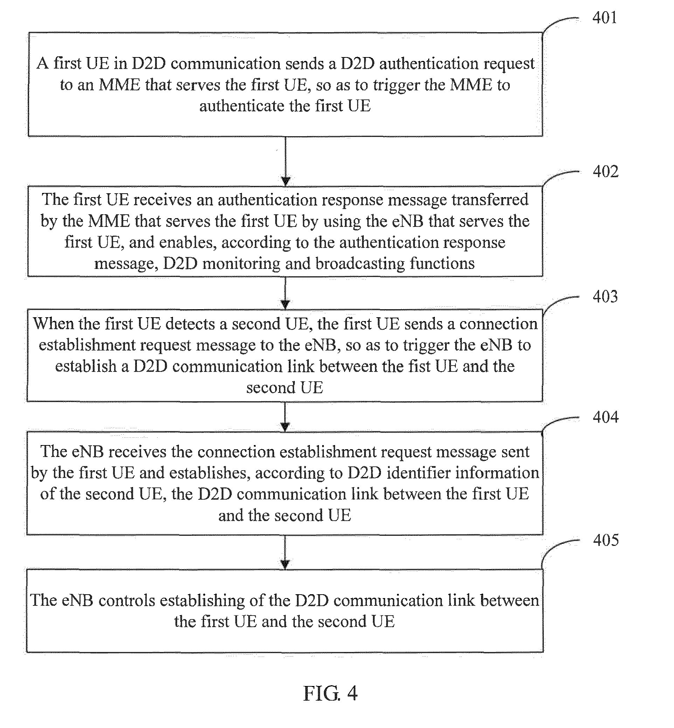

Referring to FIG. 4, an embodiment provides a method for establishing a device-to-device connection, specifically including:
401: A first UE in D2D communication sends a D2D authentication request to an MME that serves the first UE, so as to trigger the MME to authenticate the first UE.

In this embodiment, in order that D2D communication between UEs can be supported by a network, before a UE enables a D2D function, the D2D function of the UE needs to be authenticated. If the UE is authorized by the network to use the D2D function, the UE can enable the D2D function and perform corresponding data transmission. If the UE is not authorized by the network to use the D2D function, the UE cannot transmit data by using a D2D link.

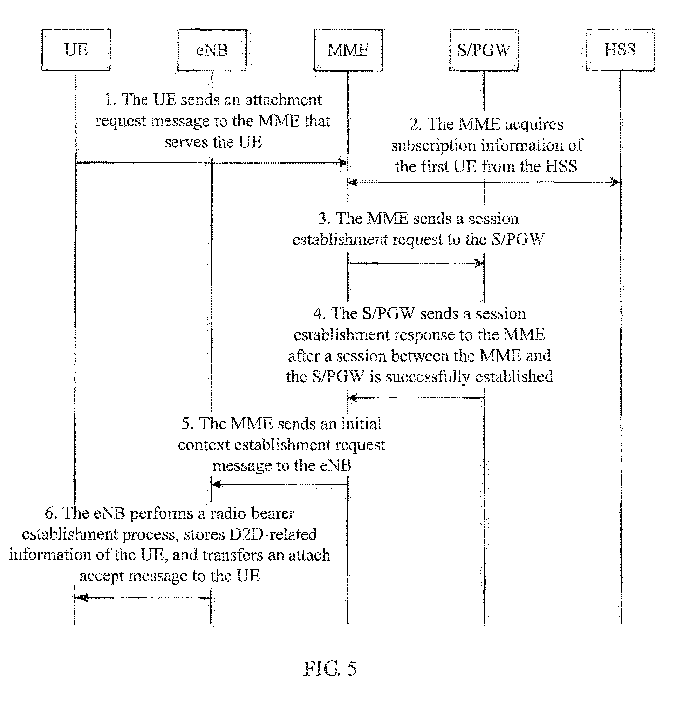

In this embodiment, referring to FIG. 5, a process for authenticating the first UE in a network attachment process of the UE is described as follows:

### 1. The UE sends an attachment request message to an MME that serves the UE.

In this embodiment, the UE sends an Attach Request (attach request) message and adds an indication carrying "D2D Capability" to the Attach Request message for the MME, so as to trigger the MME to authenticate the D2D function of the UE, where "D2D Capability" is the D2D authentication request sent by the UE to the MME.

### 2. The MME acquires subscription information of the first UE from an HSS.

In this embodiment, subscription information related to the UE that is sent by the HSS (Home Subscriber Server, home subscriber server) to the MME includes D2D subscription information of the UE, such as a D2D function authentication result of the UE. It can be learned from the D2D function authentication result whether the UE can use D2D. If the UE is allowed to use the D2D function, the subscription information further includes a D2D ID, a D2D APN, D2D-related QoS information, and the like, where the UE can use the D2D APN to acquire an IP address used for D2D communication.

### 3. The MME sends a session establishment request to an S/PGW.

### 4. The S/PGW returns a session establishment response to the MME after a session between the MME and the S/PGW is successfully established.

In this embodiment, a process in which an MME initiates a session establishment request to an S/PGW is the same as that in the prior art, and therefore no further details are provided in this embodiment. For details, see description of the prior art.

### 5. The MME sends an initial context establishment request message to an eNB.

In this embodiment, after the MME authenticates the first device, the MME uses the initial context establishment request message to send authentication result information and an authentication response message of the UE to the eNB, and further transfers the authentication response message to the first device by using the eNB. The authentication result information includes a D2D identifier of the first device and permission information about whether the first device can use the D2D function and the like, and may further include related information, such as D2D-related QoS. The MME uses an Attach Accept (attach accept) message to transfer the D2D-related information of the UE to the eNB, where the attach accept message includes the authentication response message, such as the D2D function authentication result of the UE, the D2D ID of the UE, and D2D information that needs to be broadcast by the UE, and may further include information such as the D2D APN and D2D-related QoS. The authentication response message includes the D2D identifier of the first device, the D2D information that the first device needs to broadcast, and the permission information about whether the first device can use the D2D function.

It should be noted that, although this embodiment describes an initial access process of the UE, in a service request process of the UE, the MME may also use the initial context establishment request message to transfer the foregoing UE-related D2D information to the eNB. The service request process of the UE in this embodiment is basically the same as that in the prior art, and only different in that D2D-related information is added to the UE information. Therefore, no further details about the service request (Service Request) process is provided herein.

### 6. The eNB performs a radio bearer establishment process, stores the D2D-related information of the UE, and transfers the attach accept message to the UE.

In this embodiment, in addition to transferring the D2D information of the first UE to the UE by using the attach accept message, the eNB further needs to continue to complete, with the UE, other attachment processes in the prior art, which are not further described in this embodiment. It should be noted that the MME that serves the first UE also stores the D2D subscription information, such as the D2D ID, in a context of the UE. In this embodiment, authentication processes in the first case and the second case are basically the same, and therefore no further details about the second case are provided in this embodiment.

In this embodiment, after the attachment process of the UE is complete, the UE may start to use the D2D function, for example, externally sending D2D broadcast information, such as the D2D ID, in an agreed manner, or may also start monitoring, in an agreed manner, whether another UE expecting to use D2D communication exists nearby, which is not limited in this embodiment.

It should be noted that, before the UE uses the D2D function, if in the attachment process of the UE, the network establishes no PDN connection for the D2D APN, the UE first needs to use a PDN connection establishment process to establish a PDN connection for the D2D APN, acquire an IP address used for the D2D communication from the PDN, and establish a normal bearer from the UE to the network by using the eNB.

In this embodiment, when a D2D link between two UEs can normally perform communication, the two UEs do not use the normal bearer from the UEs to the network by using the eNB. However, when the D2D link between the UEs cannot continue maintaining the communication, the eNB instructs the UEs to switch from the D2D link to the bearer that is from the UEs to the network by using the eNB, so as to ensure continuity of communication between the two UEs. When the communication between the UEs is switched over to the network, all subsequent communication between the UEs is performed by using the network.

402: The first UE receives an authentication response message transferred by the MME that serves the first UE by using the eNB that serves the first UE, and enables, according to the authentication response message, D2D monitoring and broadcasting functions.

In this embodiment, the first UE receives the authentication response message transferred by the MME that serves the first UE by using the eNB that serves the first UE. If the first UE passes authentication and authorization of the D2D function in the network attachment process, when the first UE needs to perform D2D communication, the first UE enables, according to the authentication response message, the D2D monitoring and broadcasting functions, to send D2D broadcast information, or detect existence of another UE. A specific authentication response message includes the D2D information that the first UE needs to broadcast, and the first UE may notify its own existence by broadcasting the information.

403: When the first UE detects a second UE, the first UE sends a connection establishment request message to the eNB, so as to trigger the eNB to establish a D2D communication link between the fist UE and the second UE.

In this embodiment, when the first UE discovers, by monitoring, existence of the second UE at a time point and acquires information about the second UE, such as a D2D ID, the first UE sends the connection establishment request message to the eNB, where the connection establishment request message carries D2D identifier information of the second UE, so as to establish the D2D communication link with the second UE.

404: The eNB receives the connection establishment request message sent by the first UE and establishes, according to the D2D identifier information of the second UE, the D2D communication link between the first UE and the second UE.

In this embodiment, when the first UE detects the second UE, the first UE sends the D2D connection establishment request message to the eNB and indicates the D2D ID of the second UE. Specifically, in this embodiment, that the eNB receives the connection establishment request message sent by the first UE and establishes the D2D communication link between the first UE and the second UE includes:

1. The eNB locally queries, according to the D2D ID of the second UE, whether a context of the UE exists. If the eNB can find, according to the D2D ID, the context of the second UE, it indicates that the second UE and the first UE are served by the same eNB and are in an RRC-connected state. In this case, the eNB may control the two UEs to establish a D2D communication connection and return a D2D connection establishment response message to the first UE, indicating whether a D2D connection is successfully established.

2. If the eNB cannot find the context of the destination UE, that is, if the eNB does not locally find the second UE, it is possible that the second UE is in an RRC idle state or may be served by an eNB different from the source UE, that is, the first UE. The eNB continues to send the D2D connection establishment request message to the MME that serves the first UE.

3. The MME that serves the first UE locally queries, according to the D2D ID of the second UE, whether the context of the second UE is saved, where some possibilities are as follows:
a) The MME that serves the first UE can locally find the context of the second UE, which indicates that the second UE and the first UE are served by the same MME but is in an idle state. The MME initiates a paging process to the second UE, so as to trigger a service request process (Service Request) of the second UE for a reconnection to the network. When UE#2 is reconnected to the network, the MME returns the D2D connection establishment response message to the eNB; or
b) The MME that serves the first UE cannot find the context of the second UE, which indicates that the second UE and the first UE are not served by the same MME. The MME that serves the first UE queries the HSS by using the D2D ID of the second UE, so as to acquire an MME that serves the second UE, and sends the D2D connection establishment request message to the MME that serves the second UE. The MME that serves the second UE initiates a paging process for the second UE after receiving the message, so as to trigger a service request process of the second UE for a reconnection to the network. When the second UE is reconnected to the network, the MME that serves the second UE returns the D2D connection establishment response message to the MME that serves the first UE, indicating that the second UE has been reconnected to the network. The MME that serves the first UE sends the D2D connection establishment response message to the eNB.

Further, this embodiment supports that an identifier (MME ID) of a current MME of a UE is defined as a part of a D2D ID, that is, the D2D ID of the second UE includes an identifier of the MME that serves the second UE. Then, optionally, the MME that serves the first UE may directly acquire the MME of the destination UE according to the MME ID in the D2D ID of the second UE and does not need to query the HSS.

In this embodiment, the eNB controls, according to the indication from the MME, the two UEs to establish the D2D link, and returns the D2D connection establishment response message to the first UE, indicating whether the D2D connection is successfully established.

405: The eNB controls establishing of the D2D communication link between the first UE and the second UE.

In this embodiment, after the eNB receives the D2D connection establishment response message from the MME, the eNB queries whether the context of the UE exists by using the D2D ID of the second UE, so as to verify that the second UE has been connected to the network by using the UE. Then, the eNB initiates an RRC reconfiguration process to one UE, instructing the UE to send, in a pre-agreed mode on a specified physical resource, related information used for UE monitoring, such as a particular sequence, and at the same time, initiates the RRC reconfiguration process to the other UE, instructing the UE to monitor, in a pre-agreed mode on the same physical resource, related information that is used for UE monitoring and sent by the other UE, such as the foregoing particular sequence. When the monitoring UE discovers D2D information sent by the other UE, the UE sends a measurement report to the eNB, where the measurement report carries a measurement result of the other UE, such as received signal strength. The eNB determines, according to the measurement report of the UE, whether quality of an air interface link between the two UEs is good enough to support D2D communication. If the two UEs meet a D2D communication, criterion, the eNB separately initiates the RRC reconfiguration process for the two UEs to perform D2D link configuration, for example, related information such as an ID of the D2D link. After the UEs respond to the eNB that RRC reconfiguration is complete, the UEs can use the D2D link to perform communication.

A beneficial effect of the method embodiments of the present invention is as follows: A first device in device-to-device D2D communication initiates a D2D authentication request to a mobility management entity MME that serves the first device, so as to trigger the MME to authenticate the first device; the first device receives an authentication response message transferred by the MME by using an evolved base station eNB that serves the first device and enables, according to the authentication response message, D2D monitoring and broadcasting functions; and when the first device detects a second device in the D2D communication, the first device sends a connection establishment request message to the eNB, so as to trigger the eNB to establish a D2D communication link between the first device and the second device. Thereby, a D2D connection between the two devices is controlled by a network. Therefore, an operator can effectively perform functions, such as control, management, and charging, on the D2D communication. In addition, compared with the prior art, after the D2D connection is established, because the network can be effectively controlled, interference brought by D2D communication to a UE can further be eliminated.

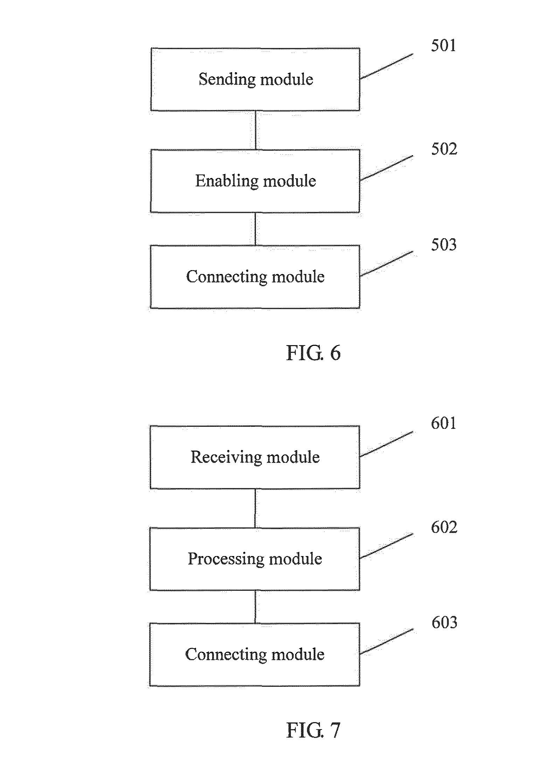

Referring to FIG. 6, an embodiment provides a first device in device-to-device communication, including: a sending module 501, an enabling module 502, and a connecting module 503.

The sending module 501 is configured to send a device-to-device D2D authentication request to a mobility management entity MME that serves the first device, so as to trigger the MME to authenticate the first device.

The enabling module 502 is configured to receive an authentication response message transferred by the MME by using an evolved base station eNB that serves the first device and enable, according to the authentication response message, D2D monitoring and broadcasting functions.

The connecting module 503 is configured to, when the enabling module 502 detects a second device in the D2D communication, send a connection establishment request message to the eNB, where the connection establishment request message carries D2D identifier information of the second device, so as to trigger the eNB to establish, according to the D2D identifier information of the second device, a D2D communication link between the first device and the second device.

The sending module 501 is specifically configured to:
send an attachment request message to the MME that serves the first device, where the attachment request message carries the D2D authentication request of the first device, so as to trigger the MME to acquire subscription information of the first device from a home subscriber server HSS, where the subscription information includes a D2D identifier of the first device and permission information about whether the first device can use a D2D function.

In this embodiment, the enabling module 502 is configured to:
receive the authentication response message sent by the eNB that serves the first device, where the authentication response message is sent by the eNB that serves the first device, which is triggered when the MME sends, after completing authentication on the first device, an initial context establishment request message to the eNB that serves the first device.

In this embodiment, the sending module 502 is further configured to:
send a service request message to the MME that serves the first device, so as to trigger the MME to send, by using the initial context establishment request message, D2D function authentication result information of the first device to the eNB, where the authentication result information includes the D2D identifier of the first device, permission information about whether the first device can use the D2D function, and the permission information about whether the first device can use the D2D function.

A beneficial effect of this embodiment includes the following: The first device in device-to-device D2D communication sends a D2D authentication request to an MME that serves the first device, so as to trigger the MME to authenticate the first device; the first device receives an authentication response message transferred by the MME by using an eNB and enables, according to the authentication response message, D2D monitoring and broadcasting functions; and, when the first device detects a second device in the D2D communication, the first device sends a connection establishment request message to the eNB, so as to trigger the eNB to establish a D2D communication link between the first device and the second device. Thereby, a D2D connection between the two devices is controlled by a network. Therefore, an operator can effectively perform functions, such as control, management, and charging, on the D2D communication. In addition, compared with the prior art, after the D2D connection is established, because the network can be effectively controlled, interference brought by D2D communication to a UE can further be eliminated.

Referring to FIG. 7, an embodiment provides an evolved base station eNB. The base station includes: a receiving module 601, a processing module 602, and a connecting module 603.

The receiving module 601 is configured to receive a device-to-device D2D authentication response message of a first device sent by a mobility management entity MME that serves the first device.

The processing module 602 is configured to transfer the authentication response message to the first device, so that the first device enables, according to the authentication response message, D2D monitoring and broadcasting functions.

The connecting module 603 is configured to, receive a connection establishment request message sent by the first device when the first device detects a second device, where the connection establishment request message carries a D2D identifier of the second device, and establish, according to the identifier information of the second device, a D2D communication link between the first device and the second device, where the first device and the second device are two devices in D2D communication.

In this embodiment, the receiving module 601 is specifically configured to:
receive an initial context establishment request message sent by the MME that serves the first device, where the initial context establishment request message carries the authentication response message of the first device, where the authentication response message includes the D2D identifier of the first device, D2D information that the first device needs to broadcast, and permission information about whether the first device can use a D2D function.

The connecting module 603 is specifically configured to:
query, on the eNB, the second device according to the D2D identifier information of the second device,; and if information about the second device is found in the eNB, control the establishing of the D2D communication link between the first device and the second device; and
if the information about the second device is not found on the eNB, send the connection establishment request message to the MME that serves the first device, so that the MME that serves the first device triggers the second device to connect to a network; receive an indication that the second device is connected to the network, where the indication is returned by the MME that serves the first device; and control the establishing of the D2D communication link between the first device and the second device.

A beneficial effect of this embodiment includes the following: The evolved base station eNB receives a device-to-device D2D authentication response message on a first device sent by a mobility management entity MME that serves the first device and transfers the authentication response message to the first device, so that the first device enables, according to the authentication response message, D2D monitoring and broadcasting functions; and, when the first device detects a second device, the eNB receives a connection establishment request message sent by the first device and establishes a D2D communication link between the first device and the second device. Thereby, a D2D connection between the two devices is controlled by a network. Therefore, an operator can effectively perform functions, such as control, management, and charging, on the D2D communication. In addition, compared with the prior art, after the D2D connection is established, because the network can be effectively controlled, interference brought by D2D communication to a UE can further be eliminated.

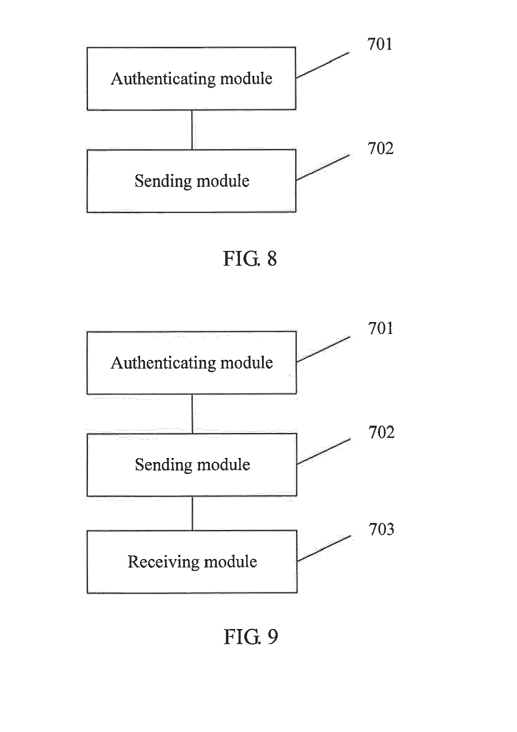

Referring to FIG. 8, an embodiment provides a mobility management entity MME to that serves a first device, including: an authenticating module 701 and a sending module 702.

The authenticating module 701 is configured to receive a device-to-device D2D authentication request sent by the first device and authenticate the first device.

The sending module 702 is configured to transfer an authentication response message to the first device by using an evolved base station eNB that serves the first device, so that the first device enables, according to the D2D authentication response message, D2D monitoring and broadcasting functions, and so that the eNB establishes, after receiving a connection establishment request message sent by the first device and according to identifier information of a second device detected by the first device, a D2D communication link between the first device and the second device detected by the first device, where the first device and the second device are two devices in D2D communication.

The authenticating module 702 is specifically configured to:
receive an attachment request message sent by the first device, where the attachment request message carries the D2D authentication request of the first device; and acquire subscription information of the first device from a home subscriber server HSS, where the subscription information includes a D2D identifier of the first device and permission information about whether the first device can use a D2D function.

The sending module 702 is configured to:
when the authenticating module completes authentication on the first device, send an initial context establishment request message to the eNB that serves the first device, where the initial context establishment request message carries the authentication response message of the first device, so as to trigger the eNB that serves the first device to transfer the authentication response message to the first device, where the authentication response message includes the D2D identifier of the first device, D2D information that the first device needs to broadcast, and the permission information about whether the first device can use the D2D function.

In this embodiment, referring to FIG. 9, the MME further includes:
a receiving module 703, configured to, after the sending module 702 transfers the authentication response message to the first device by using the eNB, receive the connection establishment request message sent by the eNB that serves the first device and query, on the MME, the second device according to the D2D identifier information of the second device; and, if information about the second device is found on the MME, initiate a paging process to the second device to trigger the second device to connect to a network, where, after the second device is connected to the network, the sending module 702 is further configured to return a first connection establishment response message to the eNB, where the first connection establishment response message is used to indicate to the eNB that the second device has been connected to the network.

Further, the sending module 702 in this embodiment is further configured to, if the information about the second device is not found on the MME that serves the first device, query the HSS about an MME that serves the second device by using with the D2D identifier of the second device, and send a D2D connection establishment request message to the MME that serves the second device, so that the MME that serves the second device initiates the paging process to trigger the second device to connect to the network; and, after the second device is connected to the network, the receiving module 703 is further configured to receive a second connection establishment response message returned by the MME that serves the second device and send the second connection establishment response message to the eNB, where the second connection establishment response message is used to indicate to the eNB that the second device has been connected to the network; or
alternatively, in this embodiment, the sending module 702 is further configured to, if the MME that serves the first device does not locally find the second device, acquire an identifier of the MME that serves the second device from the D2D identifier information of the second device and find, according to the identifier of the MME that serves the second device, the MME that serves the second device, so that the MME that serves the second device initiates the paging process to trigger the second device to connect to the network.

A beneficial effect of this embodiment includes the following: The mobility management entity MME to that serves a first device receives a device-to-device D2D authentication request sent by the first device and authenticates the first device; the MME that serves the first device sends authentication result information and an authentication response message to an evolved base station eNB; the first device enables, according to the D2D authentication response message, a D2D function; and the eNB controls, according to the authentication result information, a establishing of the D2D communication link between the first device and a second device detected by the first device. Thereby, a D2D connection between the two devices is controlled by a network. Therefore, an operator can effectively perform functions, such as control, management, and charging, on the D2D communication. In addition, compared with the prior art, after the D2D connection is established, because the network can be effectively controlled, interference brought by D2D communication to a UE can further be eliminated.

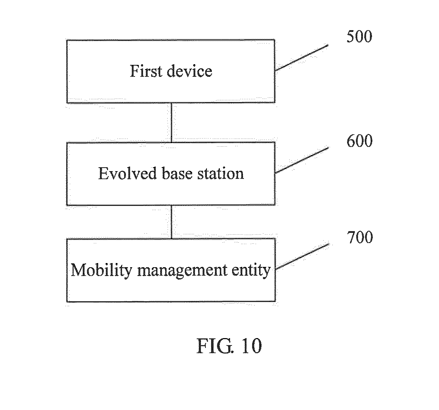

Referring to FIG. 10, an embodiment provides a system for establishing a device-to-device connection. The system includes: a first device 500 in device-to-device communication described above, an evolved base station 600 described above, and a mobility management entity 700 that serves the first device described above.

A beneficial effect of this embodiment includes the following: A first device in device-to-device D2D communication sends a D2D authentication request to a mobility management entity MME that serves the first device, so as to trigger the MME to authenticate the first device and send an authentication response message to the first device by using an evolved base station eNB; the first device receives the authentication response message sent by the MME and enables, according to the authentication response message, a D2D function; and, when the first device detects a second device in the D2D communication, the first device sends a connection establishment request message to the eNB, so as to trigger the eNB to establish a D2D communication link between the first device and the second device. Thereby, a D2D connection between the two devices is controlled by a network. Therefore, an operator can effectively perform functions, such as control, management, and charging, on the D2D communication. In addition, compared with the prior art, after the D2D connection is established, because the network can be effectively controlled, interference brought by D2D communication to a UE can further be eliminated.

The devices and the system provided in the embodiments are specifically based on the same ideas as the method embodiments. For their specific implementation processes, reference may be made to the method embodiments and no further details are provided herein.

A person of ordinary skill in the art can understand that all or a part of the steps of the embodiments may be implemented by hardware or a program instructing relevant hardware. The program may be stored in a computer readable storage medium. The storage medium may include: a read-only memory, a magnetic disk, or an optical disc.

The foregoing descriptions are merely preferred embodiments of the present invention, but are not intended to limit the present invention. Any modifications, equivalent replacements, and improvements made within the spirit and principle of the present invention shall fall within the protection scope of the present invention.

## Claims

1. A method for establishing a device-to-device connection, wherein the method comprises:
sending, by a first device in device-to-device D2D communication, a D2D authentication request to a mobility management entity MME that serves the first device, so as to trigger the MME to authenticate the first device;
receiving, by the first device, an authentication response message transferred by the MME by using an evolved base station eNB that serves the first device and enabling, according to the authentication response message, D2D monitoring and broadcasting functions; and
when the first device detects a second device in the D2D communication, sending, by the first device, a connection establishment request message to the eNB, wherein the connection establishment request message carries D2D identifier information of the second device, so as to trigger the eNB to establish, according to the D2D identifier information of the second device, a D2D communication link between the first device and the second device.

2. The method according to claim 1, wherein the sending, by a first device in D2D communication, a D2D authentication request to a mobility management entity MME that serves the first device, so as to trigger the MME to authenticate the first device comprises:
sending, by the first device, an attachment request message to the MME, wherein the attachment request message carries the D2D authentication request of the first device, so as to trigger the MME to acquire subscription information of the first device from a home subscriber server HSS, wherein the subscription information comprises a D2D identifier of the first device and permission information about whether the first device can use a D2D function.

3. The method according to claim 1 or 2, wherein the receiving, by the first device, an authentication response message transferred by the MME by using an eNB that serves the first device comprises:
receiving, by the first device, the authentication response message sent by the eNB, wherein the authentication response message is sent by the eNB, which is triggered when the MME sends, after completing authentication on the first device, an initial context establishment request message to the eNB.

4. The method according to any one of claims 1 to 3, wherein the method further comprises:
sending, by the first device, a service request message to the MME, so as to trigger the MME to transfer, by using the initial context establishment request message, D2D function authentication result information of the first device to the eNB, wherein the authentication result information comprises the D2D identifier of the first device and the permission information about whether the first device can use the D2D function.

5. A method for establishing a device-to-device connection, wherein the method comprises:
receiving, by an evolved base station eNB, a device-to-device D2D authentication response message of a first device sent by a mobility management entity MME that serves the first device;
transferring, by the eNB, the authentication response message to the first device, so that the first device enables, according to the authentication response message, D2D monitoring and broadcasting functions;
receiving, by the eNB, a connection establishment request message sent by the first device when the first device detects a second device, wherein the connection establishment request message carries D2D identifier information of the second device, wherein the first device and the second device are two devices in D2D communication; and
establishing, by the eNB according to the D2D identifier information of the second device, a D2D communication link between the first device and the second device.

6. The method according to claim 5, wherein the receiving, by an eNB, a device-to-device D2D authentication response message of a first device sent by a mobility management entity MME that serves the first device comprises:
receiving, by the eNB, an initial context establishment request message sent by the MME, wherein the initial context establishment request message carries the D2D authentication response message of the first device.

7. The method according to claim 6, wherein the D2D authentication response message comprises a D2D identifier of the first device, D2D information that the first device needs to broadcast, and permission information about whether the first device can use a D2D function.

8. The method according to any one of claims 5 to 7, wherein the establishing, by the eNB according to the identifier information of the second device, a D2D communication link between the first device and the second device comprises:
querying, locally by the eNB, the second device according to the D2D identifier information of the second device; and if the eNB locally finds information about the second device, controlling the establishing of the D2D communication link between the first device and the second device; and
if the eNB does not locally find the information about the second device, sending the connection establishment request message to the MME that serves the first device, so that the MME that serves the first device triggers the second device to connect to a network; receiving, by the eNB, an indication that the second device is connected to the network, wherein the indication is returned by the MME that serves the first device; and controlling the establishing of the D2D communication link between the first device and the second device.

9. A method for establishing a device-to-device connection, wherein the method comprises:
receiving, by a mobility management entity MME to that serves a first device, a device-to-device D2D authentication request sent by the first device, and authenticating the first device; and
transferring, by the MME, a D2D authentication response message to the first device by using an evolved base station eNB that serves the first device, so that the first device enables, according to the D2D authentication response message, D2D monitoring and broadcasting functions and, when detecting a second device, sends a connection establishment request message to the eNB, and so that further the eNB establishes, after receiving the connection establishment request message sent by the first device and according to identifier information of the second device detected by the first device, a D2D communication link between the first device and the second device, wherein the first device and the second device are two devices in D2D communication.

10. The method according to claim 9, wherein the receiving, by an MME to that serves a first device, a device-to-device D2D authentication request sent by the first device and authenticating the first device comprises:
receiving, by the MME, an attachment request message sent by the first device, wherein the attachment request message carries the D2D authentication request of the first device; and acquiring subscription information of the first device from a home subscriber server HSS, wherein the subscription information comprises a D2D identifier of the first device and permission information about whether the first device can use a D2D function.

11. The method according to claim 9 or 10, wherein the transferring, by the MME that serves the first device, an authentication response message to the first device by using an evolved base station eNB that serves the first device comprises:
after the MME completes authentication on the first device, sending, by the MME, an initial context establishment request message to the eNB, so as to trigger the eNB to transfer the authentication response message to the first device, wherein the initial context establishment request message carries the authentication response message of the first device.

12. The method according to claim 11, wherein the authentication response message comprises the D2D identifier of the first device, D2D information that the first device needs to broadcast, and the permission information about whether the first device can use the D2D function.

13. The method according to any one of claims 9 to 12, after the transferring, by the MME, an authentication response message to the first device by using an evolved base station eNB that serves the first device, further comprising:
receiving, by the MME, the connection establishment request message sent by the eNB; locally querying the second device according to D2D identifier information of the second device; if information about the second device is found locally, initiating a paging process to the second device to trigger the second device to connect to a network; and, after the second device is connected to the network, returning, by the MME, a first connection establishment response message to the eNB, wherein the first connection establishment response message is used to indicate to the eNB that the second device has been connected to the network, so that the eNB controls the establishing of the D2D communication link between the first device and the second device.

14. The method according to claim 13, wherein the method further comprises:
if the MME that serves the first device does not locally find the information about the second device, querying, by the MME, the HSS about an MME that serves the second device by using the D2D identifier of the second device, and sending a D2D connection establishment request message to the MME that serves the second device, so that the MME that serves the second device initiates the paging process to trigger the second device to connect to the network; and, after the second device is connected to the network, receiving, by the MME that serves the first device, a second connection establishment response message returned by the MME that serves the second device, and sending the second connection establishment response message to the eNB, wherein the second connection establishment response message is used to indicate to the eNB that the second device has been connected to the network, so that the eNB controls the establishing of the D2D communication link between the first device and the second device; or
if the MME that serves the first device does not locally find the second device, acquiring an identifier of an MME that serves the second device from the D2D identifier information of the second device, and finding, according to the identifier of the MME that serves the second device, the MME that serves the second device, so that the MME that serves the second device initiates the paging process to trigger the second device to connect to the network; and, after the second device is connected to the network, receiving, by the MME that serves the first device, a second connection establishment response message returned by the MME that serves the second device and sending the second connection establishment response message to the eNB, wherein the second connection establishment response message is used to indicate to the eNB that the second device has been connected to the network, so that the eNB controls the establishing of the D2D communication link between the first device and the second device.

15. A first device in device-to-device communication, wherein the device comprises:
a sending module, configured to send a device-to-device D2D authentication request to a mobility management entity MME that serves the first device, so as to trigger the MME to authenticate the first device;
an enabling module, configured to receive an authentication response message transferred by the MME by using an evolved base station eNB that serves the first device and enable, according to the authentication response message, D2D monitoring and broadcasting functions; and
a connecting module, configured to, when the enabling module detects a second device in the D2D communication, send a connection establishment request message to the eNB, wherein the connection establishment request message carries D2D identifier information of the second device, so as to trigger the eNB to establish, according to the D2D identifier information of the second device, a D2D communication link between the first device and the second device.

16. The device according to claim 15, wherein the sending module is specifically configured to:
send an attachment request message to the MME that serves the first device, wherein the attachment request message carries the D2D authentication request of the first device, so as to trigger the MME to acquire subscription information of the first device from a home subscriber server HSS, wherein the subscription information comprises a D2D identifier of the first device and permission information about whether the first device can use a D2D function.

17. The device according to claim 15 or 16, wherein the enabling module is configured to:
receive the D2D authentication response message sent by the eNB, wherein the D2D authentication response message is sent by the eNB, which is triggered when the MME sends, after completing authentication on the first device, an initial context establishment request message to the eNB.

18. The device according to any one of claims 15 to 17, wherein the sending module is further configured to:
send a service request message to the MME, so as to trigger the MME to send, by using the initial context establishment request message, D2D function authentication result information of the first device to the eNB, wherein the authentication result information comprises the D2D identifier of the first device, permission information about whether the first device can use the D2D function, and the permission information about whether the first device can use the D2D function.

19. An evolved base station eNB, wherein the base station comprises:
a receiving module, configured to receive a device-to-device D2D authentication response message of a first device sent by a mobility management entity MME that serves the first device;
a processing module, configured to transfer the authentication response message to the first device, so that the first device enables, according to the authentication response message, D2D monitoring and broadcasting functions; and
a connecting module, configured to, receive a connection establishment request message sent by the first device when the first device detects a second device, wherein the connection establishment request message carries D2D identifier information of the second device, and establish, according to the identifier information of the second device, a D2D communication link between the first device and the second device, wherein the first device and the second device are two devices in D2D communication.

20. The base station according to claim 19, wherein the receiving module is specifically configured to:
receive an initial context establishment request message sent by the MME, wherein the initial context establishment request message carries the D2D authentication response message of the first device.

21. The base station according to claim 20, wherein the authentication response message comprises a D2D identifier of the first device, D2D information that the first device needs to broadcast, and permission information about whether the first device can use a D2D function.

22. The base station according to any one of claims 19 to 21, wherein the connecting module is specifically configured to:
query, on the eNB, the second device according to the D2D identifier information of the second device; and if information about the second device is found on the eNB, control the establishing of the D2D communication link between the first device and the second device; and
if the information about the second device is not found on the eNB, send the connection establishment request message to the MME that serves the first device, so that the MME that serves the first device triggers the second device to connect to a network; receive an indication that the second device is connected to the network, wherein the indication is returned by the MME that serves the first device; and control the establishing of the D2D communication link between the first device and the second device.

23. A mobility management entity MME to that serves a first device, comprising:
an authenticating module, configured to receive a device-to-device D2D authentication request sent by the first device and authenticate the first device; and
a sending module, configured to transfer a D2D authentication response message to the first device by using an evolved base station eNB that serves the first device, so that the first device enables, according to the D2D authentication response message, D2D monitoring and broadcasting functions and, when detecting a second device, sends a connection establishment request message to the eNB, and so that further the eNB establishes, after receiving the connection establishment request message sent by the first device and according to identifier information of the second device detected by the first device, a D2D communication link between the first device and the second device, wherein the first device and the second device are two devices in D2D communication.

24. The MME according to claim 23, wherein the authenticating module is specifically configured to:
receive an attachment request message sent by the first device, wherein the attachment request message carries the D2D authentication request of the first device; and acquire subscription information of the first device from a home subscriber server HSS, wherein the subscription information comprises a D2D identifier of the first device and permission information about whether the first device can use a D2D function.

25. The MME according to claim 23 or 24, wherein the sending module is specifically configured to:
after the authenticating module completes authentication on the first device, send an initial context establishment request message to the eNB, so as to trigger the eNB to transfer the authentication response message to the first device, wherein the initial context establishment request message carries the authentication response message of the first device.

26. The MME according to claim 25, wherein the authentication response message comprises the D2D identifier of the first device, D2D information that the first device needs to broadcast, and the permission information about whether the first device can use the D2D function.

27. The MME according to any one of claims 23 to 26, wherein the MME further comprises:
a receiving module, configured to, after the sending module transfers the authentication response message to the first device by using the eNB, receive the connection establishment request message sent by the eNB that serves the first device and query, on the MME that serves the first device, the second device according to the D2D identifier information of the second device; and, if information about the second device is found in the MME, initiate a paging process to the second device to trigger the second device to connect to a network, wherein, after the second device is connected to the network, the sending module is further configured to return a first connection establishment response message to the eNB, wherein the first connection establishment response message is used to indicate to the eNB that the second device has been connected to the network, so that the eNB controls the establishing of the D2D communication link between the first device and the second device.

28. The MME according to claim 27, wherein the sending module is further configured to, if the information about the second device is not found on the MME that serves the first device, query the HSS about an MME that serves the second device by using the D2D identifier of the second device, and send a D2D connection establishment request message to the MME that serves the second device, so that the MME that serves the second device initiates the paging process to trigger the second device to connect to the network, and, after the second device is connected to the network, the receiving module is further configured to receive a second connection establishment response message returned by the MME that serves the second device and send the second connection establishment response message to the eNB, wherein the second connection establishment response message is used to indicate to the eNB that the second device has been connected to the network, so that the eNB controls the establishing of the D2D communication link between the first device and the second device; or
if the MME that serves the first device does not locally find the information about the second device, acquire an identifier of an MME that serves the second device from the D2D identifier information of the second device, and find, according to the identifier of the MME that serves the second device, the MME that serves the second device, so that the MME that serves the second device initiates the paging process to trigger the second device to connect to the network, wherein, after the second device is connected to the network, the MME that serves the first device receives a second connection establishment response message returned by the MME that serves the second device and send the second connection establishment response message to the eNB, wherein the second connection establishment response message is used to indicate to the eNB that the second device has been connected to the network, so that the eNB controls the establishing of the D2D communication link between the first device and the second device.

29. A system for establishing a device-to-device connection, wherein the system comprises the first device in device-to-device communication according to any one of claims 15 to 18, the evolved base station according to any one of claims 19 to 22, and the mobility management entity that serves the first device according to any one of claims 23 to 28.
